# EUROPEAN PATENT SPECIFICATION

(11) **EP 0 437 922 B1**
(45) Date of publication and mention of the grant of the patent: **08.05.1996**
(21) Application number: 90311641.6
(22) Date of filing: 24.10.1990
(51) Int. Cl.: G11B 20/18, G11B 20/10

(54) **Digital signal processing circuits**
Digitale Signalverarbeitungsschaltungen
Circuits de traitement de signaux numériques

(30) Priority: 30.12.1989 JP 340262/89
(43) Date of publication of application: 24.07.1991
(73) Proprietor: SONY CORPORATION, Tokyo 141 (JP)
(72) Inventor: Fukami, Tadashi, c/o Patents Division, Shinagawa-ku, Tokyo 141 (JP); Kajiwara, Tsutomu, c/o Patents Division, Shinagawa-ku, Tokyo 141 (JP)
(74) Representative: Cotter, Ivan John

(56) References cited:
- EP-A- 0 137 425
- EP-A- 0 235 782
- FR-A- 2 520 914

## Description

This invention relates to digital signal processing circuits suitable, for example, for a digital audio tape recorder.

Among magnetic recording and reproducing apparatus there is known an apparatus (hereinafter referred to as a digital audio tape recorder) in which a digital audio signal can be recorded and reproduced using a rotary drum. Upon recording, the digital audio signal is divided into blocks and an interleaving process is executed every block. After an inner code and an outer code for error detection and correction have been formed on a block unit basis, the interleave processed digital audio signal is converted into the recording signal together with the sampling frequency information, time information and the like (hereinafter referred to as recording information of the digital audio signal) and is supplied to magnetic heads.

Due to this, the digital audio signal is recorded in a predetermined area in a main data area. The recording information is converted into sub-data (sub-code data) and recorded in predetermined areas in the main data area and a sub-data area.

On the other hand, upon reproduction, the reproduced signal is demodulated by a demodulating circuit and errors in the reproduced data thus obtained are corrected by an error detecting and correcting circuit. The reproduced data which has been subjected to the error detecting and correcting process are subjected to a deinterleave process by an output circuit, converted into an analogue signal, and supplied to an output.

At this time, the reproduced data are processed on the basis of the sub-data. Due to this, the digital audio signal can be reproduced on the basis of the recording information recorded on a magnetic tape together with the digital audio signal.

Since the recording information is important to processing the reproduced data, in such a digital audio tape recorder, the recording information is repetitively recorded on the magnetic tape.

Therefore, in a digital audio tape recorder, a check is made to see if the recording information which is repetitively reproduced coincides or not, and the reproduced data are processed by using the recording information in which a coincidence result is obtained.

However, when the magnetic tape is reproduced, it is impossible to avoid the generation of errors. If the reproduced data are merely processed using the recording information in which the coincidence result was obtained, there is a problem that it is necessary to determine whether the recording information is correct or incorrect by additionally using, for instance, an operation processing unit.

FR-A-2 520 914 discloses a digital signal processing circuit corresponding to the pre-characterising portion of claim 1. EP-A-0 137 425 discloses a similar sub-code coincidence detection circuit for detecting whether successive segments of a sub-code coincide a predetermined number of times.

According to the present invention there is provided a digital signal processing circuit comprising:
a memory circuit for storing reproduced data and sub-code data;
a reproduced signal processing circuit for demodulating a reproduced signal thereby to obtain reproduced data and sub-code data, and for storing said reproduced data and said sub-code data in said memory circuit;
an error detecting and correcting circuit for executing an error detecting and correcting process on said reproduced data; and
a data output circuit for outputting the reproduced data stored in said memory circuit on the basis of said sub-code data;
wherein said reproduced signal processing circuit comprises coincidence detecting means for sequentially detecting whether the sub-code data coincides a predetermined number of times;
characterised in that said coincidence detecting means comprises:
a plurality of multiplex coincidence detecting circuits for sequentially detecting whether corresponding portions of the sub-code data coincide or not, each multiplex coincidence detecting circuit being arranged to supply the sub-code data for which coincidence is detected a predetermined number of times for that circuit to said memory circuit; and
a selecting circuit for selectively supplying portions of the sub-code data to the multiplex coincidence detecting circuits in accordance with the kind of sub-code data in said portions.

The invention will now be described by way of example with reference to the accompanying drawings, throughout which like parts are referred to by like references, and in which:
Figure 1 is a block diagram showing an embodiment of digital audio tape recorder according to the present invention;
Figure 2 is a block diagram showing a digital signal processing circuit;
Figure 3 is a block diagram showing a reproduced signal processing circuit; and
Figures 4 to 6 are signal waveform diagrams which are used to explain the operation.

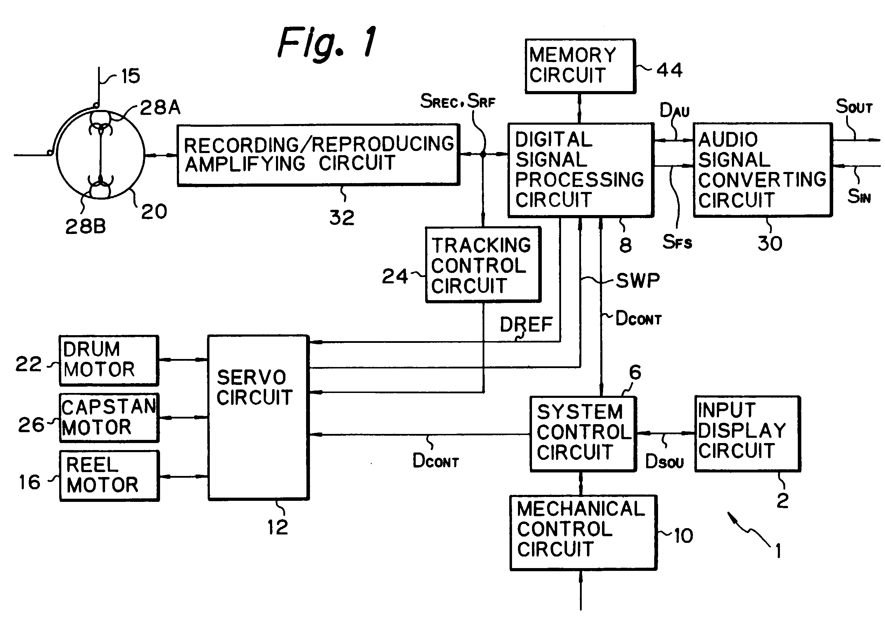

Referring to Figure 1, a digital audio tape recorder (DAT) 1 records and reproduces audio signals S_{IN} and S_{OUT}, and comprises an input display circuit 2, formed as an operation processing circuit, which supplies operation data D_{SOU} in response to the operation of an operator, and also switches the display on a display panel on the basis of predetermined control data. Thus, in the DAT 1, the operating mode is switched in response to the operation by the operator, and the operating state can be confirmed by the display on the display panel.

A system control circuit 6 produces control data and the like in response to the operation data D_{SOU}, thereby controlling the operation of the DAT 1. At this time, the system control circuit 6 adds recording information to the control data which are supplied to a digital signal processing circuit 8 and supplies the resultant data upon recording. Thus, after the audio signal S_{IN} has been converted into the digital audio signal on the basis of the recording information, the digital audio signal is sequentially recorded on a magnetic tape 15.

A mechanical control circuit 10 drives and controls a loading/ejecting mechanism of a tape cassette, a magnetic tape loading mechanism, and the like on the basis of the control data. A servo circuit 12 drives a reel motor 16 on the basis of the control data, thereby rotating a reel of a magnetic tape cassette (not shown) at a predetermined speed.

Upon recording and reproduction, the servo circuit 12 forms a switching pulse signal SWP whose signal level is switched at the starting time of the scanning of magnetic heads, and the servo circuit 12 drives a drum motor 22 in a manner such that the switching pulse signal SWP has a predetermined phase relative to a rotary drum reference signal DREF. Therefore, the servo circuit 12 drives the drum motor 22 so as to rotate a rotary drum 20 once every interleave period.

The servo circuit 12 also drives a capstan motor 26 so as to transport the tape 15 at a pitch of two tracks every interleave period. Due to this, upon recording, recording tracks are sequentially formed in a format which is standardized with respect to the DAT 1.

Moreover, upon reproduction, the servo circuit 12 executes a tracking control of the capstan motor 26 on the basis of a tracking error signal which is supplied from a tracking control circuit 24.

In the embodiment of Figure 1, magnetic heads 28A and 28B are arranged on the rotary drum 20 of a diameter of 30 mm at an angular interval of 180°, and the tape 15 is wrapped at a wrap angle of 90°.

A rotary drum reference signal DREF is a reference signal with a duty ratio of 50% which is repeated at interleave periods of 60 msec and 30 msec in the LP mode and SP mode (long time recording mode and standard time recording mode), respectively.

An audio signal converting circuit 30 comprises an analogue digital converting circuit, a digital/analogue converting circuit, and a low-pass filter circuit. Upon recording, the audio signal converting circuit 30 executes a quantising process on the input audio signal S_{IN} and converts it into a digital signal on the basis of the recording information (that is, sampling frequency information and quantizing process information) which is supplied from the system control circuit 6.

On the other hand, upon reproduction, an inverse quantizing process is executed on the basis of the recording information which is obtained by reproducing the tape 15, and the digital audio signal D_{AU}, which is supplied from the digital signal processing circuit 8, is converted into the audio signal S_{OUT} as an analogue signal and is output.

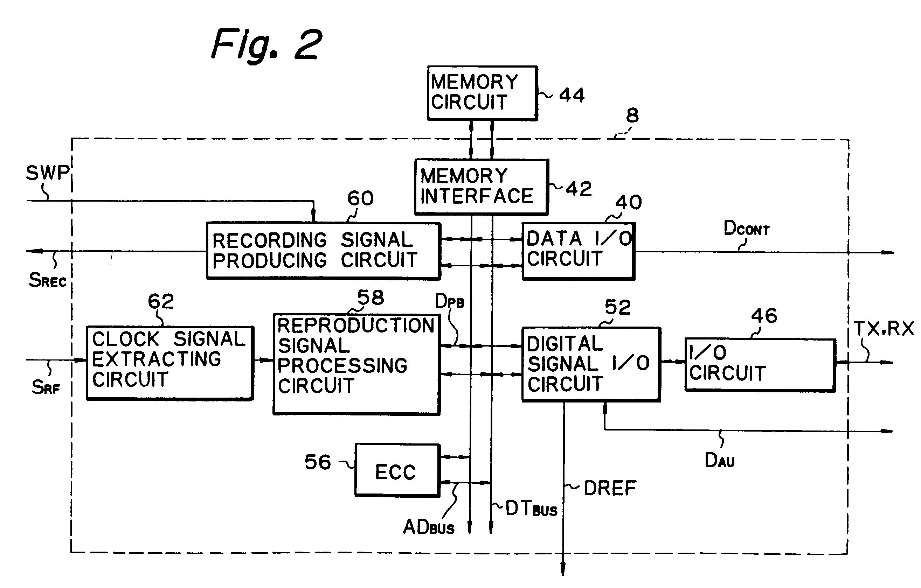

As shown in Figure 2, which illustrates the digital signal processing circuit 8, a data input/out circuit 40 receives control data D_{CONT} which is supplied from the system control circuit 6 and stores the control data D_{CONT} on a predetermined area of a memory circuit 44, through a memory interface circuit 42, thereby switching the operation of the digital signal processing circuit 8 on the basis of the control data D_{CONT}.

The data input/out circuit 40 stores the recording information which is added to the control data D_{CONT} and is input into a predetermined area in the memory circuit 44 upon recording. Upon reproduction, the data input/output circuit 40 supplies the recording information which had been reproduced and stored in the memory circuit 44 to the system control circuit 6 and the audio signal converting circuit 30.

Upon recording, an input/output circuit 46 extracts audio data from a digital audio signal RX, having an AES/EBU format, which is supplied from an external apparatus of the DAT 1 and supplies the data to the digital signal input/output circuit 52. On the other hand, upon reproduction, the input/output circuit 46 synthesizes a digital audio signal TX of an AES/EBU format from the audio data which are supplied from the digital signal input/out circuit 52 and supplies the signal TX.

Thus, in the DAT 1, in addition to the audio signals S_{IN} and S_{OUT} as analogue signals, the digital audio signals RX and TX of the AES/EBU format can be recorded and reproduced.

The digital signal input/output circuit 52 loads the control data D_{CONT}, which are supplied from the memory circuit 44 to a data bus DT_{BUS} through the memory interface circuit 42, and switches the operation on the basis of the control data D_{CONT}.

The digital signal input/output circuit 52 sequentially counts predetermined clock signals in accordance with the recording information, thereby forming the rotary drum reference signal DREF, in which one period is set to 60 msec and 30 msec in the LP and SP modes, respectively.

The digital signal input/output circuit 52 selects and receives the digital audio signal which is supplied from the input/output circuit 46 or the audio signal converting circuit 30 upon recording, and divides the selected and received digital audio signal into blocks with an interleave period on the basis of the count value of a counter circuit to produce the rotary drum reference signal DREF.

At this time, the digital signal input/output circuit 52 sequentially supplies the digital audio signal to the memory interface circuit 42 by using the count value of the counter circuit as a reference, thereby interleaving the digital audio signal every block and producing the input audio data.

On the other hand, upon reproduction, the digital signal input/output circuit 52 sequentially receives the reproduced audio data, stored in the memory circuit 44, through the memory interface circuit 42. At this time, by sequentially receiving the reproduction audio data by using the count value of the counter circuit as a reference, the digital signal input/output circuit 52 deinterleaves the reproduction audio data.

The digital signal input/output circuit 52 supplies the deinterleaved audio data to the input/output circuit 46 and the audio signal converting circuit 30 at a predetermined clock frequency on the basis of the reproduced sampling frequency information, thereby making it possible to supply the digital audio signal TX or the audio signal S_{OUT} as necessary.

An error detecting and correcting circuit 56 loads the control data D_{CONT} at the interleave period from the memory circuit 44 and switches the operation in accordance with the control data D_{CONT}. That is, the error detecting and correcting circuit 56 sequentially loads the input audio data stored in the memory circuit 44 upon recording and forms an outer code and an inner code for error detection and correction (comprising a C1 code and a C2 code) on a block unit basis and stores the codes in the memory circuit 44. The error detecting and correcting circuit 46 sequentially loads the sub-data to be recorded into the sub-code area from the recording information stored in the memory circuit 44 and forms an outer code for error detection and correction and stores the codes in the memory circuit 44.

On the other hand, upon reproduction, the error detecting and correcting circuit 56 executes the error correcting process using the inner and outer codes with respect to reproduction data D stored in the memory circuit 44. At this time, the error detecting and correcting circuit 56 loads the error correction result which was detected by a reproduced signal processing circuit 58 from the memory circuit 44 together with the reproduced data D_{PB}, and repeats the error correcting process by using the error detection result.

A recording signal producing circuit 60 switches the operation in accordance with the control data D_{CONT} and stops the operation upon reproduction in a manner similar to the digital signal input/out circuit 52. Upon recording, the recording signal producing circuit 60 sequentially loads the input audio data and the codes for error detecting and correction, which were stored in the memory circuit 44, and produces a recording signal S_{REC} in accordance with a recording format of the DAT 1 which is determined by the recording information. At this time, with respect to the sub-data (that is, comprising the recording information) which is recorded into the sub-data area and main data area, the recording signal producing circuit 60 produces a simple parity code and converts the sub-data and the parity code into the recording signal S_{REC}.

The recording signal producing circuit 60 produces the recording signal S_{REC} at a transmission rate of 4.075 mbps in the recording format of the LP mode and produces the recording signal S_{REC} at a transmission rate of 9.408 mbps in the recording format of the SP mode. Thus, the digital audio signal is recorded in accordance with the digital audio signal is recorded in accordance with the format which was standardized with respect to the DAT1.

Upon reproduction, a clock signal extracting circuit 62 extracts a reproduction clock signal from a reproduced signal SRF obtained through a recording/reproducing amplifying circuit 32 (Figure 1) and supplies the reproduction clock signal together with the reproduced signal SRF to the reproduced signal processing circuit 58.

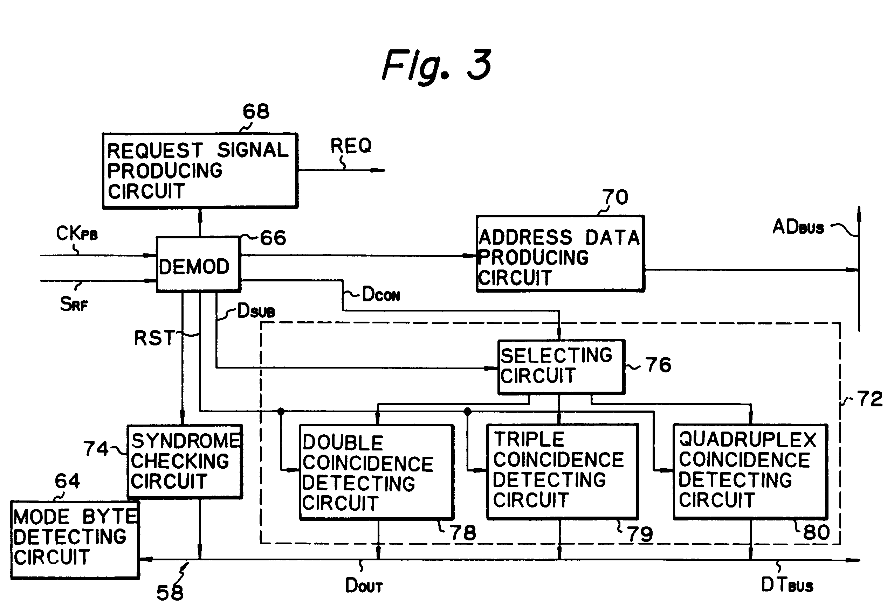

Upon recording, the reproduced signal processing circuit 58 stops the operation on the basis of the control data D_{CONT}. Upon reproduction, the reproduced signal processing circuit 58 demodulates the reproduced signal SRI by using a reproduction clock signal CK_{PB} as a reference and, thereafter, it supplies the resultant reproduction data D_{PB} to the memory circuit 44. As shown in Figure 3, the reproduced signal processing circuit 58 supplies the control data D_{CONT} which is supplied to the data bus DT_{BUS} at the interleave period, to a mode byte detecting circuit 64. Due to this, the reproduced signal processing circuit 58 switches the operation in accordance with a mode byte of the control data D_{CONT}.

The reproduced signal processing circuit 58 supplies the reproduction clock signal CK_{PB} and the reproduced signal S_{RF} to a demodulating circuit 66, by which the reproduction signal S_{RF} is demodulated. The demodulating circuit 66 detects a sync signal from the reproduced signal S_{RF} and selects and supplies the demodulated reproduced data by using the sync signal as a reference, thereby to select and supply the necessary data to a request signal producing circuit 68, an address data producing circuit 70, a multiplex coincidence circuit 72, and a syndrome checking circuit 74.

At this time, with respect to the sub-data, the demodulating circuit 66 executes an error detecting process using the simple parity code and selectively supplies only the error-less data.

On the basis of an output signal of the demodulating circuit 66, the request signal producing circuit 68 supplies a write request signal REQ to the memory circuit 44 at a predetermined timing. Therefore, in the reproduction signal processing circuit 58, after a write permission signal which is returned from the memory interface circuit 42 in response to the write request signal REQ has been supplied, predetermined data are supplied to the data bus DT_{BUS}, thereby sequentially storing the reproduction data, recording information, and the like in the memory circuit 44.

On the other hand, the address data producing circuit 70 sequentially produces address data and supplies such data to an address bus AD_{BUS}, using block addresses as references, thereby storing the reproduction data and the like in a predetermined area in the memory circuit 44.

On the other hand, the syndrome checking circuit 74 receives the audio data in the demodulated reproduced data together with the C1 and C2 codes, and error detects the audio data by using the C1 code. The syndrome checking circuit 74 supplies the error detection result to the data bus DT_{BUS} together with the audio data and the C1 and C2 codes at a predetermined timing, thereby storing the reproduced audio data and the like in a predetermined area in the memory circuit 44.

After the demodulated reproduced data D_{PB} has been once stored in the memory circuit 44, it is error corrected by the error detecting and correcting circuit 56 (Figure 2). The error corrected reproduced data are sequentially supplied through the digital signal input/output circuit 52. Thus, the digital audio signal recorded on the tape 15 can be reproduced.

On the other hand, the multiplex coincidence circuit 72 supplies sub-code data D_{SUB} reproduced from the sub-data area and main data area to a selecting circuit 76 to switch the contact on the basis of a switching signal D_{CON} which is supplied from the demodulating circuit 66, thereby selectively supplying the demodulated recording information to a double coincidence detecting circuit 78, a triple coincidence detecting circuit 79, and a quadruple coincidence detecting circuit 80 in accordance with the kind of recording information.

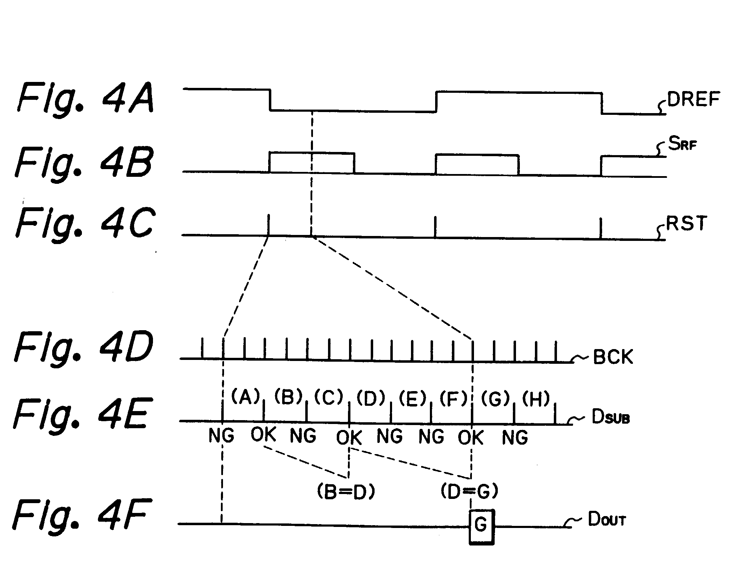

That is, as shown in Figure 4, the double coincidence detecting circuit 78 is reset by a reset signal RST (Figure 4C) which is supplied from the demodulating circuit 66 at a timing when the rotary drum reference signal DREF (Figure 4A) is switched (that is, the timing when the reproduced signal S_{RF} (Figure 4B) rises at a time when the heads 28A and 28B start the scan of the tape 15).

Further, the recording information which is supplied synchronously with a predetermined clock signal BCK (Figure 4D) is selectively supplied to the double coincidence detecting circuit 78 through the selecting circuit 76, so that the double coincidence detecting circuit 78 receives the sub-data D_{SUB} (Figure 4E) which is obtained from the sub-data area and sequentially discriminates whether it coincides or not.

That is, among the sequential continuous sub-data (A), (B), (C), ..., the sub-data (B), (D), and (G) (shown by adding a symbol OK to a symbol NG indicative of the error detected sub-data) in which no error areas detected in the demodulating circuit 66 are fetched. When a double coincidence result is obtained, the coincident sub-data (G) is supplied to the data bus D_{OUT} (Figure 4F). That is, in the sub-data to be recorded into the sub-data area, data ID control ID, block addresses, and the like are assigned. Eight blocks are recorded in each recording track.

Therefore, by selectively supplying the double coincidence sub-data as mentioned above, the burden on the multiplex coincidence circuit 72 is reduced, and the sub-data which were correctly reproduced in a sufficient range can be obtained. Even where the tape 15 is transported rapidly to execute, for instance, search reproduction, sub-data of a sufficient accuracy can be obtained.

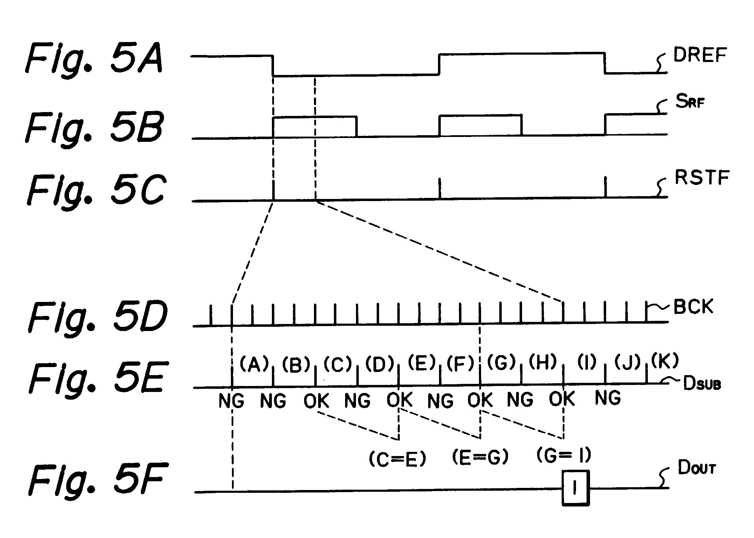

On the other hand, as shown in Figure 5, in a manner similar to the double coincidence detecting circuit 78, the triple coincidence circuit 79 is reset by the reset signal RST (Figure 5C) which is supplied from the demodulating circuit 66 at a time when the rotary drum reference signal DREF (Figure 5A) is switched (that is, the time when the reproduction signal S_{RF} (Figure 5B) rises).

The triple coincidence detecting circuit 79 sequentially discriminates the coincidence regarding a predetermined main ID of the sub-data D_{SUB} (Figure 5E) which is obtained from the main data area with respect to the recording information which is supplied synchronously with a predetermined clock signal BCK (Figure 5D).

That is, the triple coincidence detecting circuit 79 fetches the data (C), (E), (G) and (I) of the main ID in which no error was detected in the demodulating circuit 66 among a format (ID0), an emphasis processing ID (ID1), a copy inhibition ID (ID6), and a pack ID (ID7). When the triple coincidence result is obtained, the data (I) of the coincident main ID are supplied to the data bus D_{OUT} (Figure 5F). Where such a main ID (ID0, ID1, ID6, ID7) is recorded into the main data area, it is recorded in each block in the main data area, so that the main ID is recorded 128 times in one recording track. Therefore, by selectively supplying the main ID in which the triple coincidence result was obtained as mentioned above, a main ID of a high reliability can certainly be obtained.

Consequently, in accordance with the kind of recording information, the recording information is selectively supplied to the double coincidence detecting circuit 78 and triple coincidence detecting circuit 80, and the recording information in which the double coincidence result is obtained and the recording information in which the triple coincidence result is obtained are stored in the memory circuit 44. Thus, the recording information which is sufficient and has a high reliability can be obtained, reducing the burden of the multiplex coincidence circuit 72.

Therefore, the reproduction data can be processed by using the recording information without checking the recording information by additionally providing an operation processing circuit and the like. The reproduction data can be processed with certainty using a construction which is simpler, due to omitting such an operation processing circuit.

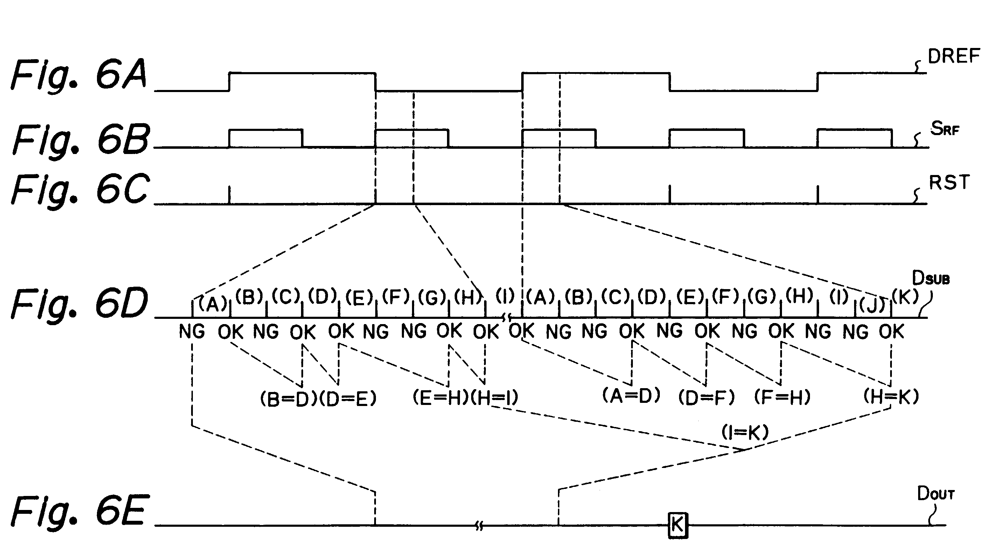

On the other hand, as shown in Figure 6, the quadruple coincidence detecting circuit 80 is reset by the reset signal RST (Figure 6C) which is supplied from the demodulating circuit 66 at a time when the rotary drum reference signal DREF (Figure 6A) trails (that is, the time when the reproduction signal S_{RF} (Figure 6B) rises at a time when the head 28A starts a scan).

Further, through the selecting circuit 76, the quadruple coincidence detecting circuit 80 selectively receives the ID (ID2) indicative of the sampling frequency of the digital audio signal, ID (ID3) indicative of the channel number of the digital audio signal, ID (ID4) to identify the quantizing process of the digital audio signal, and ID (ID5) indicative of the track pitch with respect to the main ID of the sub-data D_{OUT} (Figure 6E) obtained from the main data area, and sequentially discriminates the coincidence or otherwise.

Due to this, if the quadruple coincidence result is obtained with regard to the data (B), (D), (E), (H) and (I) of the main ID in which no error was detected in the demodulating circuit 66, the data (I) of the coincident main ID are held. After that, from the subsequent start time point of the scan of the head 28B, with respect to the data (A), (D), (F), (H) and (K) of the main ID in which no error was detected in the demodulating circuit 66, the discrimination is again sequentially performed.

When the quadruple coincidence result is obtained, a check is made to see if the coincidence result is derived or not between the data (I) of the main ID which had first been held and the data (K) of the main ID in which the coincidence result was now obtained. When the coincidence result is derived, the data (K) of the coincident main ID are supplied to the data bus Dₒᵤₜ (Figure 6E) at the subsequent scan start time.

On the contrary, if a non-coincidence result is obtained, from the scan start time of the subsequent recording track, the discrimination is again sequentially performed with regard to the data of the main ID in which no error was detected in the demodulating circuit 66.

That is, in such a main ID (ID2 to ID4) to be recorded into the main data area, since the reproduced digital audio signal is converted into the analogue signal, they are the necessary important recording information.

Therefore, if the main ID in which the quadruple coincidence result is obtained and which coincides among the recording tracks, is selectively supplied as mentioned above, the main ID of an extremely high reliability can be obtained.

Therefore, the recording information checking means such as an operation processing circuit and the like can be omitted.

As mentioned above, the recording information is selectively supplied to the double coincidence detecting circuit 78, the triple coincidence detecting circuit 79, and the quadruple coincidence detecting circuit 80 in accordance with the kind of recording information. The recording information in which the double coincidence result was obtained, the recording information in which the triple coincidence result was obtained, and the recording information in which the quadruple coincidence result was obtained, and which coincides among recording tracks (such recording information is hereinafter referred to as multiplex coincidence processed recording information) are respectively stored in the memory circuit 44. Thus, the burden on the multiplex coincidence circuit 72 can be reduced and recording information which is sufficient and has a high reliability can be obtained.

Therefore, on the basis of the recording information stored in the memory circuit 44, the audio data which were sequentially reproduced can be processed.

In the above construction, the memory interface circuit 42, the control data input/output circuit 40, the digital signal input/output circuit 52, the reproduced signal processing circuit 58, the recording signal producing circuit 60, and the error detecting and correcting circuit 56 load the control data D_{CONT} stored in the memory circuit 44 at predetermined times, thereby switching the operation on the basis of the control data D_{CONT}.

That is, upon recording, after the digital audio signal has been divided into blocks in the digital signal input/output circuit 52, it is interleaved and converted into the input audio data. After the code for error detection and correction has been formed by the error detecting and correcting circuit 56, the input audio data are converted into the recording signal S_{REC} by the recording signal producing circuit 60 at the subsequent interleave period. The recording signal S_{REC} is sequentially supplied to the heads 28A and 28B, and the digital audio signal can be sequentially recorded onto the tape 15.

On the other hand, after the reproduced clock signal CK_{PS} has been extracted by the clock signal extracting circuit 62, the reproduction signal S_{RF} is demodulated by the reproduction signal processing circuit 58 and the reproduction data D, B are stored in the memory circuit 44.

At this time, in the sub-data reproduced from the sub-data area, with respect to the sub-data in which no error was detected, the discrimination is sequentially performed by the double coincidence detecting circuit 78. When the double coincidence result is obtained, the coincident sub-data are supplied to the data bus DT_{BUS}.

Due to this, in the sub-data reproduced from the sub-data area, the sub-data in which the double coincidence result was obtained are stored into the memory circuit 44.

On the other hand, in the main ID of the format ID (ID0), emphasis processing ID (ID1), copy inhibition ID (ID6), pack ID (ID7), with regard to the data of the main ID in which no error was detected, the discrimination is sequentially performed by the triple coincidence detecting circuit 79. If the triple coincidence result is obtained, the coincident main ID is supplied to the data bus DT_{BUS}.

Thus, in the main ID (ID0, ID1, ID6, ID7), the data of the main ID in which the triple coincidence result was obtained are stored in the memory circuit 44.

On the other hand, in the main ID (ID2 to ID4), with respect to the data of the main ID in which no error was detected, the discrimination is sequentially performed by the quadruple coincidence detecting circuit 80.

Due to this, the data of the main ID in which the quadruple coincidence result was obtained and which coincides among recording tracks are output to the data bus DT_{BUS} and stored in the memory circuit 44.

Thus, the recording information in which the number of multiplex coincidence processing times is selectively switched in accordance with the kind of recording information can be stored in the memory circuit 44. Recording information of high reliability can be obtained, and the reproduced data can be certainly processed on the basis of the recording information.

According to the above construction, the number of multiplex processing times is selectively switched in accordance with the kind of recording information, and the recording information in which the double coincidence result is obtained, the recording information in which the triple coincidence result is obtained, and the recording information in which the quadruple coincidence result is obtained, and data which coincide between recording tracks are stored in the memory circuit 44. Thus, recording information of a high reliability can be obtained by a simple construction and the reproduced data can certainly be processed on the basis of the recording information.

The above embodiment has been described with respect to the case where the number of multiplex processing times is switched; and the recording information in which the double coincidence result is obtained, the recording information in which the triple coincidence result is obtained, and the recording information in which the quadruple coincidence result is obtained, and data which coincide between recording tracks are stored into the memory circuit. However, the invention is not limited to the above case but various switching methods can be widely applied as necessary.

Further, the above embodiment has been described with respect to the case where the digital audio signal of the AES/EBU format and the audio signal as an analogue signal are recorded and reproduced. However, the invention is not limited to the above case, but can be widely applied to the cases where various signals are recorded and reproduced such as cases where only the digital audio signal of the AES/EBU format is recorded and reproduced, cases where only the audio signal as an analogue signal is recorded and reproduced, and the like.

Moreover, although the above embodiment has been described with respect to the case where the invention is applied to a DAT, the invention can be applied to an external memory device of an operation processing unit and the data which are input and output to/from an operation processing unit can be also recorded and reproduced.

In addition, the invention is not limited to a magnetic recording and reproducing apparatus, but can be widely applied to a DAT for only reproduction, and further, a magnetic reproducing apparatus for reproducing various data other than an audio signal.

## Claims

1. A digital signal processing circuit comprising:
a memory circuit (44) for storing reproduced data and sub-code data;
a reproduced signal processing circuit (58) for demodulating a reproduced signal thereby to obtain reproduced data and sub-code data, and for storing said reproduced data and said sub-code data in said memory circuit (44);
an error detecting and correcting circuit (56) for executing an error detecting and correcting process on said reproduced data; and
a data output circuit (52) for outputting the reproduced data stored in said memory circuit (44) on the basis of said sub-code data;
wherein said reproduced signal processing circuit (58) comprises coincidence detecting means for sequentially detecting whether the sub-code data coincides a predetermined number of times;
characterised in that said coincidence detecting means comprises:
a plurality of multiplex coincidence detecting circuits (78, 79, 80) for sequentially detecting whether corresponding portions of the sub-code data coincide or not, each multiplex coincidence detecting circuit being arranged to supply the sub-code data for which coincidence is detected a predetermined number of times for that circuit to said memory circuit (44); and
a selecting circuit (76) for selectively supplying portions of the sub-code data to the multiplex coincidence detecting circuits (78, 79, 80) in accordance with the kind of sub-code data in said portions.

2. A digital signal processing circuit according to claim 1 wherein said multiplex coincidence detecting circuits (78, 79, 80) detect the coincidence or otherwise of the sub-code data between recording tracks.

## Patentansprüche

1. Digitalsignal-Verarbeitungsschaltung, mit:
einer Speicherschaltung (44) zum Speichern von reproduzierten Daten und Subcodedaten;
einer Reproduktionssignalverarbeitungsschaltung (58) zur Demodulierung eines reproduzierten Signals, um dadurch Reproduktionsdaten und Subcodedaten zu erhalten, und zum Speichern der reproduzierten Daten und der Subcodedaten in der Speicherschaltung (44);
einer Fehlerermittlungs- und Korrekturschaltung (56) zur Ausführung eines Fehlerermittlungs- und Korrekturverfahrens für die reproduzierten Daten; und
einer Datenausgangsschaltung (52) zur Ausgabe der reproduzierten Daten, die in der Speicherschaltung (44) gespeichert sind, auf der Basis der Subcodedaten;
wobei die Reproduktionssignalverarbeitungsschaltung (58) eine Übereinstimmungsermittlungseinrichtung aufweist, um sequentiell zu ermitteln, ob die Subcodedaten eine bestimmte Anzahl von Malen übereinstimmen;
dadurch gekennzeichnet, daß die Übereinstimmungsermittlungseinrichtung aufweist:
mehrere Multiplex-Übereinstimmungsermittlungsschaltungen (78, 79, 80) zur sequentiellen Ermittlung, ob entsprechende Bereiche der Subcodedaten übereinstimmen oder nicht, wobei jede Multiplex-Übereinstimmungsermittlungsschaltung eingerichtet ist, die Subcodedaten, bei denen eine Übereinstimmung ermittelt wird, eine bestimmte Anzahl von Malen für diese Schaltung zur Speicherschaltung (44) zu liefern; und
eine Auswahlschaltung (76) zur selektiven Lieferung von Bereichen der Subcodedaten zu den Multiplex-Übereinstimmungsermittlungsschaltungen (78, 79, 80) in Abhängigkeit von der Art der Subcodedaten in diesen Bereichen.

2. Digitale Signalverarbeitungsschaltung nach Anspruch 1, wobei die Multiplex-Übereinstimmungsermittlungsschaltungen (78, 79, 80) die Übereinstimmung oder das Gegenteil der Subcodedaten zwischen Aufzeichnungsspuren ermitteln.

## Revendications

1. Circuit de traitement de signal numérique comprenant :
un circuit de mémoire (44) pour stocker des données reproduites et des données de sous-code ;
un circuit de traitement de signal reproduit (58) pour démoduler un signal reproduit pour ainsi obtenir des données reproduites et des données de sous-code, et pour stocker lesdites données reproduites et lesdites données de sous-code dans ledit circuit de mémoire (44);
un circuit de détection et de correction d'erreur (56) pour exécuter un processus de détection et de correction d'erreur sur lesdites données reproduites ; et
un circuit de sortie de données (52) pour émettre en sortie les données reproduites stockées dans ledit circuit de mémoire (44) sur la base desdites données de sous-code,
dans lequel ledit circuit de traitement de signal reproduit (58) comprend un moyen de détection de coïncidence pour détecter séquentiellement si oui ou non les données de sous-code coïncident un nombre prédéterminé de fois,
caractérisé en ce que ledit moyen de détection de coïncidence comprend :
une pluralité de circuits de détection de coïncidence multiple (78, 79, 80) pour détecter séquentiellement si oui ou non des parties correspondantes des données de sous-code coïncident, chaque circuit de détection de coïncidence multiple étant agencé pour appliquer les données de sous-code pour lesquelles une coïncidence est détectée un nombre prédéterminé de fois pour ce circuit sur ledit circuit de mémoire (44) ; et
un circuit de sélection (76) pour appliquer sélectivement des parties des données de sous-code aux circuits de détection de coïncidence multiple (78, 79, 80) en fonction du type de données de sous-code dans lesdites parties.

2. Circuit de traitement de signal numérique selon la revendication 1, dans lequel lesdits circuits de détection de coïncidence multiple (78, 79, 80) détectent la coïncidence ou sinon les données de sous-code entre des pistes d'enregistrement.
